# EUROPÄISCHE PATENTSCHRIFT

(11) **EP 0 876 013 B1**
(45) Veröffentlichungstag und Bekanntmachung des Hinweises auf die Patenterteilung: **03.11.1999**
(21) Anmeldenummer: 97122928.1
(22) Anmeldetag: 29.12.1997
(51) Int. Cl.: H04B 10/105, H04B 7/185

(54) **Verfahren und Anordnung zum unterbrechungsfreien Betrieb von optischen Nachrichtenverbindungen zwischen Satelliten in LEO-Netzwerken**
Method and device for function without interruption of optical communication links between satallites in LEO networks
Procédé et dispositif de fonctionnement sans interruption de liaisons de communication entre satallites dans des réseaux LEO

(30) Priorität: 16.05.1997 CH 115397
(43) Veröffentlichungstag der Anmeldung: 04.11.1998
(73) Patentinhaber: OERLIKON CONTRAVES AG, 8050 Zürich (CH)
(72) Erfinder: Dreischer, Thomas, 8152 Opfikon/ZH (CH); Kellermeier, Johann, 85579 Neubiberg (DE)
(74) Vertreter: Hotz, Klaus, Dipl.-El.-Ing./ETH

(56) Entgegenhaltungen:
- GIGGENBACH D: "OPTISCHE KOMUNIKATION IM WELTRAUM" FUNKSCHAU, Bd. 68, Nr. 2, 5. Januar 1996, Seiten 68-70, XP000554686
- LAMBERT S G: "SHORT-RANGE MULTI-TERMINAL SATELLITE CROSSLINK COMMUNICATIONS (U)" COMMUNICATIONS - FUSING COMMAND, CONTROL AND INTELLIGENCE, SAN DIEGO, OCT. 11 - 14, 1992, Bd. 3 OF 3, 11. Oktober 1992, Seiten 1170-1174, XP000356694 INSTITUTE OF ELECTRICAL AND ELECTRONICS ENGINEERS
- KATSUTOSHI TSUKAMOTO ET AL: "HETERODYNE OPTICAL DETECTION/SPATIAL TRACKING SYSTEM USING SPATIAL FIELD PATTERN MATCHING BETWEEN SIGNAL AND LOCAL LIGHTS" ELECTRONICS & COMMUNICATIONS IN JAPAN, PART I - COMMUNICATIONS, Bd. 77, Nr. 12, 1. Dezember 1994, Seiten 73-87, XP000505189
- MITSUO NOHARA ET AL: "A LINK STUDY OF A LOW-EARTH ORBIT SATELLITE COMMUNICA-TIONS SYSTEM USING OPTICAL INTERSATELLITE LINKS" IEICE TRANSACTIONS ON COMMUNICATIONS, Bd. E76-B, Nr. 5, 1. Mai 1993, Seiten 536-543, XP000381142

## Beschreibung

Die Erfindung bezieht sich auf ein Verfahren und eine Anordnung zum unterbrechungsfreien Betrieb von optischen Nachrichtenverbindungen zwischen Satelliten in LEO-Netzwerken (**L**ow **E**arth **O**rbiting).

Die mittlerweile weltweit in vielen dichtbesiedelten Regionen errichteten zellulären Funknetze gewähren im Zusammenwirken mit bereits vorhanden gewesenen leitungsgebundenen Kommunikationsnetzen ein bisher nie dagewesenes Mass an individueller Erreichbarkeit. Die sich hieraus ergebenden wirtschaftlichen Vorteile für die Nutzer entsprechender Dienste rechtfertigen die hohen Kosten für den Aufbau der dazugehörigen Infrastruktur. So kann eine einzelne feste Funkstelle eines solchen Netzes unter normalen topographischen Bedingungen mobile Teilnehmer bis zu einer Entfernung von etwa 20 km erfassen, wobei die dadurch gegebene maximale Ausdehnung einer hierdurch begrenzten Zelle in ungünstigem Gelände erheblich kleiner wird. Aufgrund der positiven Erfahrung mit sich in geostationären Umlaufbahnen befindlichen Rundfunksatelliten liegt der Gedanke nahe, die hierdurch erzielte weitgehende Unabhängigkeit vom Gelände sowie die grosse räumliche Ausdehnung des erfassten Gebietes mit ähnlichen Mitteln auch für Mobilfunksysteme zu erzielen.

Während der Rundfunkempfang von geostationären Satelliten auch mit relativ kleinen Antennen durch die Entwicklung sehr rauscharmer Vorverstärker und Mischer möglich wurde, bleibt bei bidirektionalen Verbindungen das Problem, mit zum geostationären Satelliten nahezu ungerichtet abstrahlenden Antennen und sehr niedriger Sendeleistung akzeptable Datenraten über sehr grosse Entfernungen (ca. 36000 km) zu übertragen. Eine Lösung dieses Problems liegt in der Verwendung von relativ dicht über der Erdoberfläche umlaufenden Satelliten, deren eingeschränkte Sichtbarkeit durch das Vorhandensein einer Vielzahl identischer Satelliten, die untereinander Nachrichten austauschen und weiterreichen, kompensiert wird. Es existieren bereits mehrere konkrete Vorschläge; genannt seien IRIDIUM (Brunt P., "Iridium: overview and status", Space-Communications. Vol.14, no.2; 1996; p.61-8), M - STAR und TELEDESIC (System Description Excerpt, March 21, 1994), wobei IRIDIUM noch vor der Jahrtausendwende in die Nutzungsphase treten wird.

Merkmal aller genannten Systeme ist die Verwendung einer Vielzahl sich in niedriger Umlaufbahn um die Erde bewegender Satelliten, welche in Untergruppen aufgeteilt sich jeweils gleichmässig auf einer Umlaufbahn verteilen, die dadurch gekennzeichnet ist, dass sie die den Erdäquator enthaltende Ebene in zwei Punkten in einem stumpfen Winkel durchtritt. Die Umlaufbahnen aller Satelliten sind zueinander derart angeordnet, dass eine gleichmässige Bedeckung der Erdoberfläche durch Satelliten erzielt wird. Die von den Satelliten beschriebenen Umlaufbahnen überschneiden sich in zwei Punkten abhängig von der Bahnneigung. Bei gleicher Höhe aller Bahnen wird durch sogenanntes Inter-Plane-Phasing und die Wahl von Neigungswinkeln der einzelnen Orbitebenen ungleich 90° eine Kollision von Satelliten mit unterschiedlicher Umlaufbahn vermieden. Die Verbindung der einzelnen Satelliten untereinander findet derzeit über entsprechend ausgerichtete Mikrowellen-Richtantennen statt. Dies stellt zwischen Satelliten derselben Umlaufbahn kein Problem dar, da der Abstand sowie die Richtung der Nachbarsatelliten verhältnismässig stabil sind. Komplizierter hingegen wird die Situation bei Verbindungen zu den Satelliten benachbarter Umlaufbahnen. Während einer Erdumrundung kommt es bei den Schnittpunkten aller Umlaufbahnen zu einem Seitenwechsel der in den benachbarten Umlaufbahnen mitfliegenden Satelliten.

Sofern eine Richtfunkverbindung zu diesen seitlich zur Flugrichtung befindlichen Satelliten besteht, muss eine Nachführung der Richtantenne über einen grösseren Raumwinkelbereich vollführt werden, sobald die Empfangsleistung ein Minimum unterschreitet, oder, sofern dies nicht möglich ist, eine Übergabe an eine in anderer Richtung angebrachte Antenne erfolgt. Der Wechsel der Richtungen der benachbarten Satelliten kann nahezu sprunghaft erfolgen, sofern diese sich nahezu quer zur Flugrichtung befinden. Im Normalfall erfolgt daher die Übergabe der Verbindung an eine andere Antenne, wodurch sich infolge der erforderlichen Akquisitionszeit eine verbindungslose Phase ergibt.

Schnelle Drehbewegungen massereicher und räumlich ausgedehnter am Satelliten angebrachter Körper tragen zudem zu dessen Destabilisierung bei. Schliesslich bedingt die begrenzte Ausdehnung der Richtantennen auch bei Verwendung von Millimeterwellen die Abstrahlung von Energie in einen verhältnismässig grossen Raumwinkel, wodurch im Hinblick auf die in der Nähe der Überschneidungspunkte aller Umlaufbahnen anzutreffenden Situation einer hohen Dichte von Satelliten möglichst viele verschiedene Übertragungskanäle zur Verfügung stehen müssen, was bei der beschränkten Bandbreite der zur Anwendung kommenden Mikrowellen-Richtantennen eine Beschränkung der Bandbreite der einzelnen Kanäle erzwingt. Dies ist aber für die Verbindung der Satelliten untereinander nicht akzeptabel, da über diese Verbindungen auch Nachrichten zu anderen Satelliten weitergereicht werden, der Informationsfluss also wesentlich höher ist als im Verkehr zwischen Boden und Satellit.

Lambert et al. haben in einer Veröffentlichung (Short-Range Multi-Terminal Satellite Cross-link Communications (U), "Communications-Fusing Command, Control and Intelligence" San Diego, Oct. 11 - 14, 1992, Bd. 3 von 3, 14. Okt. 1992, Seiten 1170-1174) vorgeschlagen, bei einer Einrichtung der eingangs erwähnten Art bestimmte auf der Anwendung von Mikrowellen beruhende, sich an Bord eines Satelliten befindende Übertragungsvorrichtungen durch vorzugsweise drei optische Kommunikationsterminals zu ersetzen, weil sie kleinere Antennen aufweisen.

Folglich ist es Aufgabe der im folgenden beschriebenen Erfindung ein neues Verfahren dieser Art zu schaffen, um gewisse Nachteile des Stands der Technik zu vermeiden und Nachrichtenverbindungen zu beliebigen benachbarten Satelliten oben beschriebener Systeme bei höchsten Übertragungsraten unterbrechungsfrei zu gewährleisten.

Diese Aufgabe wird erfindungsgemäss durch ein Verfahren mit den im Anspruch 1 angegebenen Merkmalen gelöst.

Dieses Verfahren kann im vorteilhafter Weise bei optischen Freiraum-Übertragungssystemen für unterbrechungsfreie Verbindungen zwischen einzelnen Satelliten global zugänglicher Low Earth Orbiting Satelliten-Kommunikationssysteme Anwendung finden, und zwar mittels einer Vorrichtung geringer räumlicher Ausdehnung und niedrigen Gewichts.

Vorteilhafte Ausführungen der Erfindung sind in den abhängigen Ansprüchen angegeben.

Die Erfindung bezieht sich auf Verbesserungen von bestimmten optischen Kommunikationsterminals, die sich an Bord der in den oben erwähnten Systemen eingesetzten Satelliten befinden. Die optischen Kommunikationsterminals sind auf jedem Satelliten in wenigstens vierfacher Ausführung angebracht und beinhalten eine für Sendung und Empfang vorgesehene Übertragungseinrichtung, die mittels eines optischen Kopfes in Azimut und Elevation drehbar ausgeführt ist. Erfindungsgemässe Terminals sind an Aussenflächen des Satelliten jeweils in Bewegungsrichtung sowie entgegengesetzt zur Bewegungsrichtung des Satelliten derart angebracht, dass die azimutale Null-Ausrichtung ihrer Teleskope mit der Tangente der vom Satelliten beschriebenen Umlaufbahn zusammenfällt.

Weitere Konfigurationen können eine beliebige Anzahl von Terminals beinhalten, insbesondere zum gleichzeitigen Unterhalt von mehr als zwei Verbindungen zu benachbarten Satelliten. Weiterhin ist für einen durch Fremdlichtquellen unbeeinträchtigten Datenaustausch zwischen zwei Satelliten neben den anderen gängigen Verfahren das Homodyn-Verfahren vorgesehen. Auf diese Weise kann auch das Signal eines direkt vor der Sonne befindlichen Satelliten detektiert werden. Der mit einem optischen Terminal hergestellte Kontakt zu einem seitlichen, auf einer anderen Umlaufbahn befindlichen Satelliten wird während des Durchfliegens der Schnittpunkte aller Umlaufbahnen durch Nachführen des um zwei Achsen drehbaren, sehr kleinen und leichten Teleskops gehalten. Auch die Nachführung geschieht mittels kohärent detektierter Differenzsignale, ist also unempfindlich bezüglich durch die Sonne hervorgerufener Störungen. Weiterhin konzentriert sich die optische Leistung des von einem optischen Terminal ausgesandten Lichtstrahls trotz der kleinen Apertur des Teleskops auf einen sehr engen Winkelbereich, wodurch die erforderliche Sendeleistung sehr gering ist. Die dadurch erforderliche sehr genaue Ausrichtung des Lichtstrahls auf den erwünschten Satelliten beinhaltet als kritischen Faktor jedoch gleichzeitig den Vorteil der störungsfreien Kommunikation mit im geringen gegenseitigen Abstand angeordneten Satelliten, wie dies im Bereich sich überschneidender Umlaufbahnen der Fall ist.

Ein weiterer Vorteil liegt in den extrem hohen Bandbreiten, die durch optische Kommunikation zur Verfügung gestellt werden können. So repräsentiert bei einer Wellenlänge von 1500 nm ein spektrales Segment von 1 nm Breite im Frequenzbereich eine Bandbreite von etwa 130 GHz. Leitungsgebundene optische Übertragungssysteme, welche den Widrigkeiten des übertragenden Mediums, insbesondere der Dispersion der Gruppenlaufzeit, ausgesetzt sind, ermöglichen die Übertragung mehrerer hundert Gbit pro Sekunde. Mit der optischen Vernetzung der Satelliten oben beschriebener Systeme kann Bandbreite im Mikrowellenspektrum für die Kommunikation zwischen Erde und Satellit freigesetzt werden, wobei die dadurch ausgelöste Zunahme des Datenstroms zwischen den Satelliten durch optische Systeme problemlos bewältigt werden kann.

Ein weiterer Vorteil des erfindungsgemässen Verfahrens besteht darin, dass die Anwendung kohärenter Übertragungsverfahren die Beeinflussung des empfangenen Signals durch das Signal des eigenen optischen Senders mittels unterschiedlicher optischer Frequenzen vermeidet.

Die Erfindung wird nachfolgend beispielsweise an Hand von Zeichnungen näher erläutert. Es zeigen:
**Fig. 1** das aus 66 Satelliten bestehende IRIDIUM-Netz,
**Fig. 2** die perspektivische Darstellung einer ausgewählten Gruppe von Satelliten des IRIDIUM-Netzes,
**Fig. 3** die Gruppe aus **Fig. 2** vor dem Passieren des Nordpols,
**Fig. 4** die Gruppe aus **Fig. 2** während des Passierens des Nordpols,
**Fig. 5** die Gruppe aus **Fig. 2** nach dem Passieren des Nordpols,
**Fig. 6** die Gruppe aus **Fig. 2** vor dem Passieren des Südpols,
**Fig. 7** die Gruppe aus **Fig. 2** während des Passierens des Südpols,
**Fig. 8** die Gruppe aus **Fig. 2** nach dem Passieren des Südpols,
**Fig. 9** ein Diagramm des Azimut- und Elevations-Erfassungswinkels der nächsten benachbarten IRIDIUM-Satelliten auf anderen Umlaufbahnen,
**Fig. 10** eine aus 4 Terminals bestehende Konfiguration für IRIDIUM,
**Fig. 11** eine Seitenansicht dieser IRIDIUM-Konfiguration,
**Fig. 12** das aus 840 Satelliten bestehende TELEDESIC-Netz,
**Fig. 13** die perspektivische Darstellung einer ausgewählten Gruppe von Satelliten des TELEDESIC-Netzes,
**Fig. 14** die Gruppe aus **Fig. 13** vor dem Passieren des Südpols,
**Fig. 15** eine aus 8 Terminals bestehende Konfiguration für TELEDESIC,
**Fig. 16** eine Seitenansicht dieser TELEDESIC-Konfiguration,
**Fig. 17** ein Diagramm des Azimut- und Elevations-Erfassungswinkels der nächsten benachbarten TELEDESIC-Satelliten auf anderen Umlaufbahnen,
**Fig. 18** ein Diagramm des Azimut- und Elevations-Erfassungswinkels der übernächsten benachbarten TELEDESIC-Satelliten auf anderen Umlaufbahnen,
**Fig. 19** ein erstes Ausführungsbeispiel eines optischen Terminals,
**Fig. 20** ein zweites Ausführungsbeispiel eines optischen Terminals,
**Fig. 21** eine weitere aus 6 Terminals bestehende Konfiguration, und
**Fig. 22** eine Seitenansicht dieser Konfiguration.

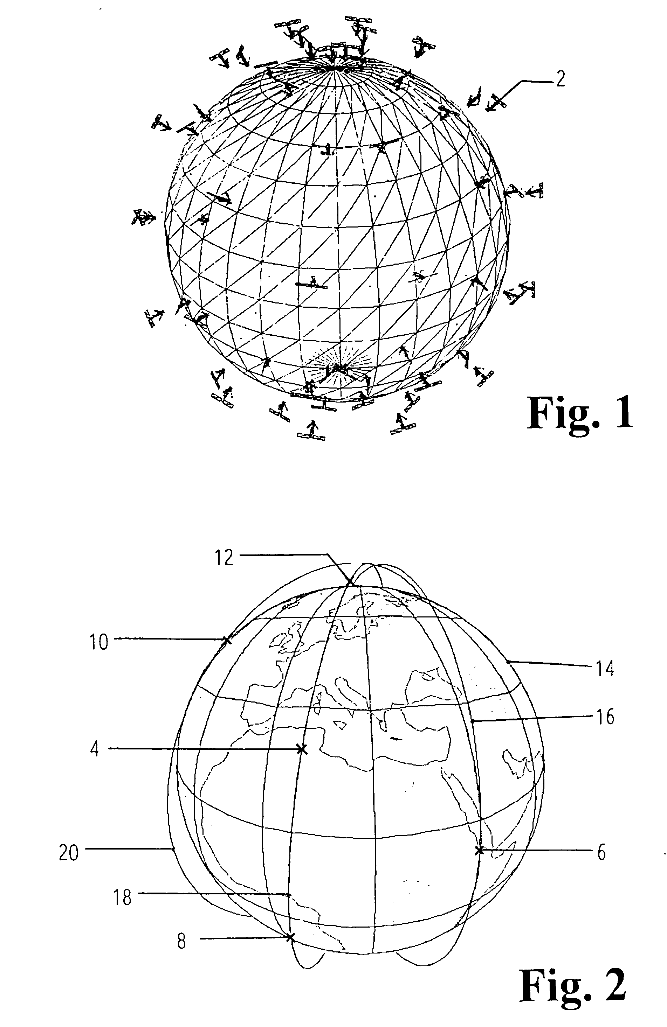

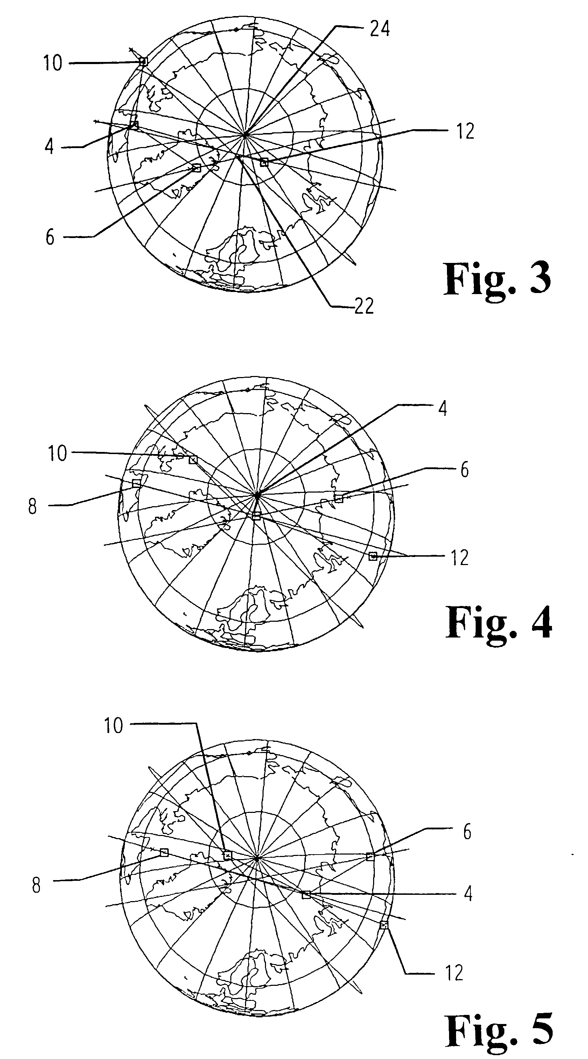

In **Fig. 1** sind die 66 Satelliten **2** des IRIDIUM-Netzes auf ihren Umlaufbahnen um die Erde schematisch dargestellt. Zur Verdeutlichung der Struktur des Netzes zwischen den einzelnen Satelliten ist in **Fig. 2** lediglich eine Gruppe von miteinander direkt durch Nachrichtenverbindungen verbundenen Satelliten dargestellt. Zentrales Element dieser Gruppe ist ein Satellit **4**, welcher mit den auf seiner eigenen Umlaufbahn **18** vor- und nachlaufenden Satelliten **12** und **8** in Verbindung steht. Zwei weitere auf benachbarten Umlaufbahnen **20** und **16** befindliche Satelliten **10** und **6** bilden mit dem Satelliten **4** Strecken, welche mit der Tangente an der Umlaufbahn des Satelliten **4** einen Winkel von etwa 300 Grad bzw. etwa 120 Grad bilden. Das mit den die Verbindungen symbolisierenden Strecken versehene Ensemble der Satelliten **4**, **6**, **10** und **12** in **Fig. 3** durchläuft in dieser Darstellung den in der Nähe des Nordpols **24** befindlichen Schnittpunkt **22** aller Umlaufbahnen von IRIDIUM-Satelliten, wobei sich der Winkel zwischen der Tangente an der Umlaufbahn in Position des Satelliten 4 und den Strecken zu den sich auf benachbarten Umlaufbahnen bewegenden Satelliten **6** und 10 im Zuge eines Seitenwechsels der Satelliten **6** und **10** ändert.

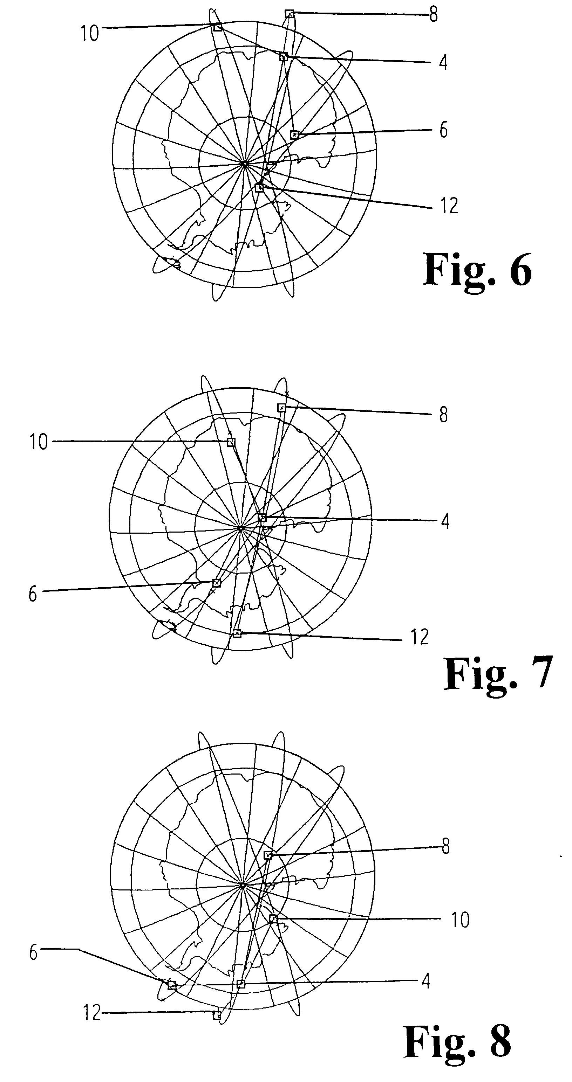

Die **Fig. 4** und **5** stellen zwei weitere Phasen im Bereich der sich in der Nähe des Nordpols überschneidenden Umlaufbahnen dar, während in den **Fig. 6** bis **8** dieselbe Situation in der Nähe des Südpols dargestellt ist.

**Fig. 6** bis **8** zeigen das aus den **Fig. 2** bis **5** bekannte Ensemble von Satelliten vor, während und nach dem Passieren des in der Nähe des Südpols befindlichen Kreuzungspunktes der Umlaufbahnen durch den zentralen Satelliten **4**.

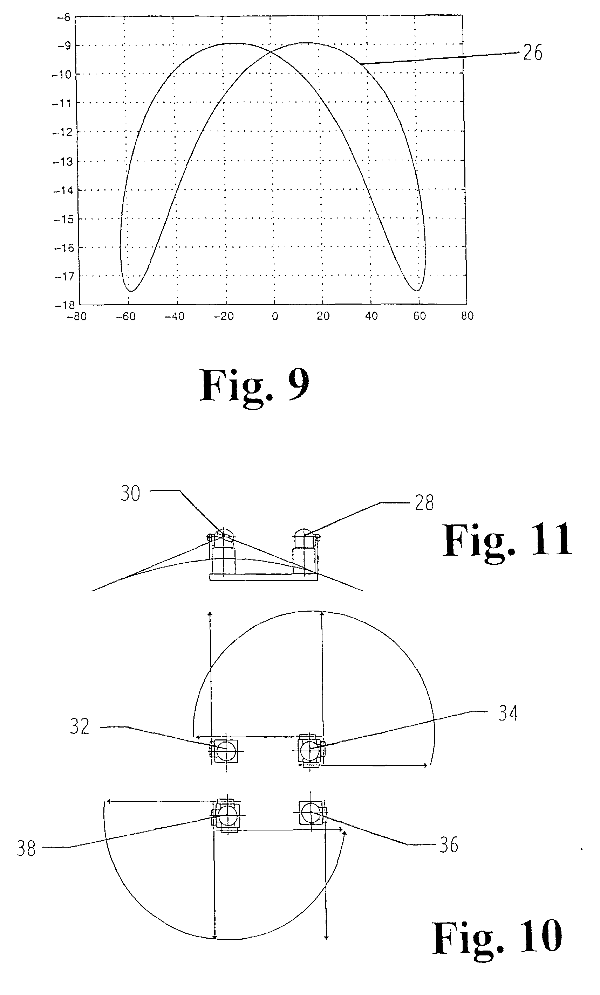

Eine in **Fig. 9** dargestellte Kurve zeigt in der Perspektive des Satelliten **4** den Azimut- und Elevationserfassungswinkel eines auf einer benachbarten Umlaufbahn mitfliegenden Satelliten **6** oder **10**, welcher die Kreuzungspunkte aller Umlaufbahnen vor dem Satelliten **4** durchläuft, während eines vollen Erdumlaufs. Der Elevationserfassungswinkel entlang der Kurve **26** ändert sich um weniger als das Doppelte seines minimalen Wertes, der gegenseitige Abstand zwischen den Satelliten **6** bzw. **10** und **4** ist also auch beim Durchfliegen des Kreuzungspunktes der Umlaufbahnen gross genug, um keine zu abrupte Winkeländerung der zwischen den Satelliten **6** bzw. **10** und **4** vorhandenen Strecken zu bewirken. In **Fig. 9** ist die max. Elevation = - 8.937° und die min. Elevation = -17.54°.

Die für optische Verbindungen erforderlichen optischen Kommunikationsterminals können an den Satelliten auf die in **Fig. 10** dargestellte Weise angebracht werden. Während ein optisches Terminal **32** die Verbindung zu dem auf gleicher Umlaufbahn vorausfliegenden Satelliten **12** hält, wird der auf gleicher Umlaufbahn nachfliegende Satellit **8** durch ein weiteres optisches Terminal **36** erfasst. Die beiden weiteren optischen Terminals **34** und **38** erfassen den in Flugrichtung des Satelliten links- bzw. rechtsseitigen Bereich und damit die nächstgelegenen auf den benachbarten Umlaufbahnen mitfliegenden Satelliten **6** und **10**. Wie aus der Darstellung ersichtlich, können beide optische Terminals **34** und **38** im Azimut einen Winkelbereich von -90 bis +90 Grad überstreichen und somit sowohl auf links- wie auch auf rechtsseitig benachbarten Umlaufbahnen mitfliegende Satelliten erfassen. Aus diesem Grund können durch beide optische Terminals **34** und **38** die auf benachbarten Umlaufbahnen mitfliegenden Satelliten **6** und **10** über die Kreuzungspunkte der links- und rechtsseitig benachbarten Umlaufbahnen hinweg unterbrechungsfrei verfolgt werden, womit sich die ständige Verfügbarkeit der optischen Übertragungsstrecke ergibt. Eine Front- bzw. Rückansicht (**Fig. 11**) der Anordnung der optischen Terminals zeigt ein optisches Terminal **28** zur Aufrechterhaltung der Verbindung zu einem auf der gleichen Umlaufbahn voraus- bzw. nachfliegenden Satelliten und ein optisches Terminal **30**, dessen von diesem ausgehende Verbindungsstrecke zu einem optional rechts- oder linksseitig mitfliegenden Satelliten in Form zweier Linien dargestellt ist.

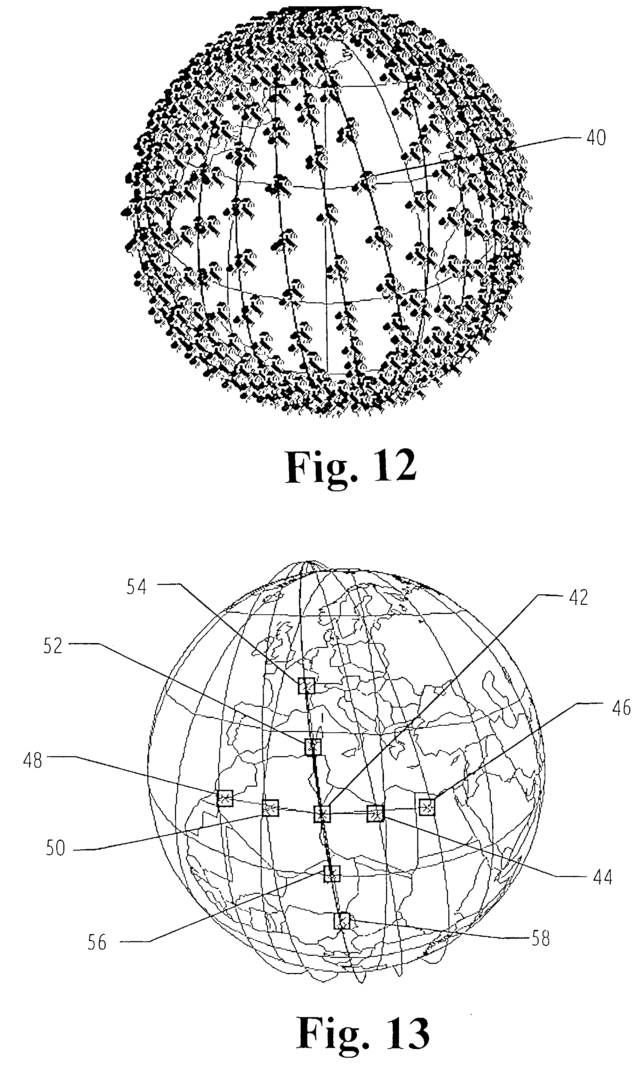

**Fig. 12** zeigt das vollständig installierte Satelliten-Netz TELEDESIC mit 840 Satelliten **40**. Eine ausgewählte Gruppe von miteinander vernetzten TELEDESIC-Satelliten ist in **Fig. 13** dargestellt. Die Tiefe der Vernetzung einzelner Gruppen ist höher als bei IRIDIUM, es werden jeweils zwei auf derselben Umlaufbahn voraus- bzw. nachfliegende Satelliten **52** und **54** bzw. **56** und **58** sowie auf rechts- bzw. linksseitig benachbarten Umlaufbahnen gelegene Satelliten **44** und **46** bzw. **50** und **48** mit einem zentralen Satelliten **42** der Gruppe verbunden.

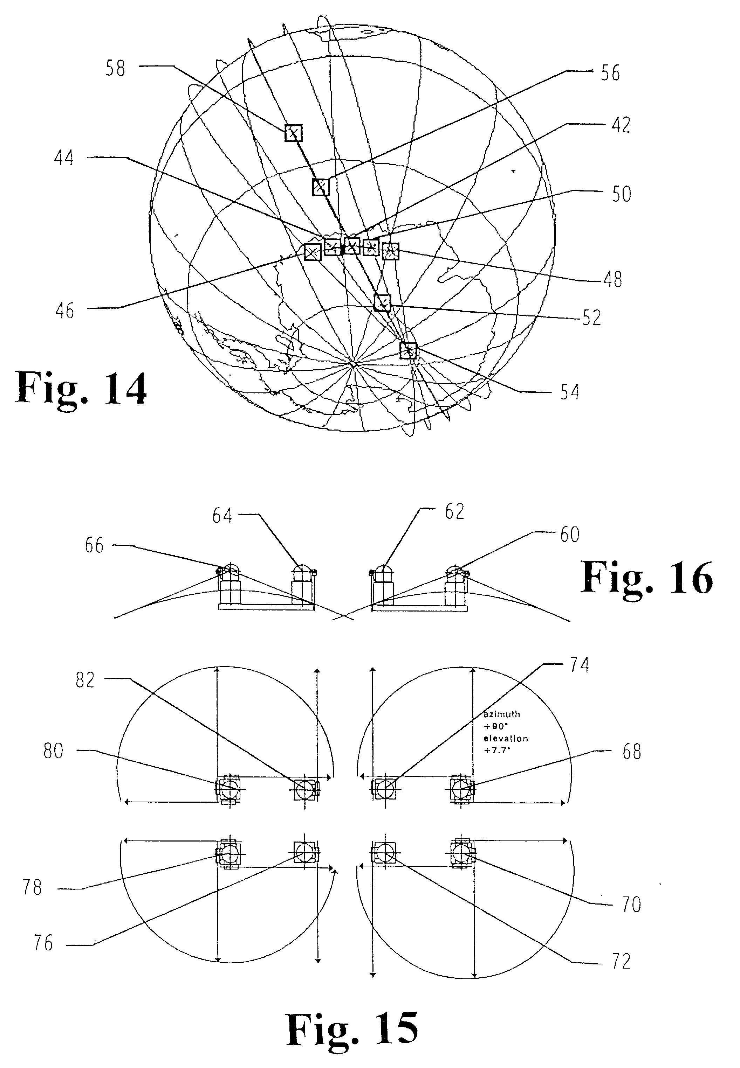

**Fig. 14** zeigt die Gruppe von Satelliten aus **Fig. 13** vor dem Passieren des sich in der Nähe des Südpols befindenden Kreuzungspunktes aller Umlaufbahnen, in welchem Satellit **54** steht.

**Fig. 15** zeigt eine entsprechende Anordnung der erforderlichen optischen Terminals auf dem Satelliten **42**. Optische Terminals **74** und **82** halten die Verbindungen zu den beiden auf derselben Umlaufbahn vorausfliegenden Satelliten **52** und **54**, weitere optische Terminals **72** und **76** sind auf die beiden in derselben Umlaufbahn nachfliegenden Satelliten **56** und **58** gerichtet. Weitere optische Terminals **78** und **80** bzw. **68** und **70** halten die Verbindung zu auf jeweils zwei nächstgelegenen links- bzw. rechtsseitig von der des zentralen Satelliten **42** vorhandenen Umlaufbahnen sich bewegenden Satelliten. Wie aus der Front- bzw. Rückansicht (**Fig. 16**) der Anordnung der optischen Terminals ersichtlich, erfassen zur Verbindung zu in seitlichen Umlaufbahnen mitfliegenden Satelliten vorgesehene optische Terminals **60** und **66**, welche neben den für auf der eigenen Umlaufbahn vor- bzw. nachfliegende Satelliten angebrachten optischen Terminals **62** und **64** gruppiert sind, aufgrund des erforderlichen Elevations-Erfassungswinkels sowie ihres gegenseitigen Abstands auf dem Satellitenkörper mitfliegende Satelliten auf beiden Seiten. Hierdurch ist es ebenfalls möglich, seitlich mitfliegende Satelliten im Laufe einer Erdumrundung ohne zeitliche Lücken zu verfolgen.

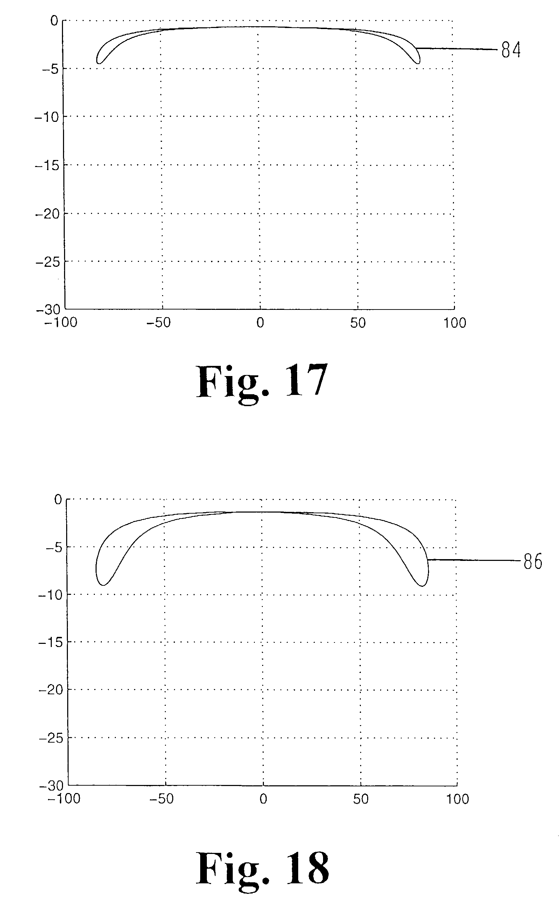

**Fig. 17** zeigt den Azimut- und den Elevations-Erfassungswinkel, unter denen ein Zentralsatellit seine Nachbarn in der direkt rechts angrenzenden Umlaufbahn sieht. **Fig. 17** zeigt daher den Azimut- bzw. den Elevations-Erfassungswinkel, den die Verbindungsstrecke zu den Satelliten **44** und **50** auf den nächsten benachbarten Umlaufbahnen während eines vollen Erdumlaufs der Gruppe beschreibt, sofern die Satelliten **44** und **50** die Kreuzungspunkte der Umlaufbahnen vorher durchfliegen. In **Fig. 17** ist die max. Elevation = - 0.645° bei Azimut = 0° und die min. Elevation = -4.523° bei Azimut ± 82.86°. Wenn der zentrale Satellit **42** die Kreuzungspunkte aller Umlaufbahnen passiert, zeigt die Kurve **84** einen Elevationserfassungswinkel von etwa 1 Grad, was bei der hohen Krümmung erdnaher Umlaufbahnen auf eine geringe Entfernung der Satelliten schliessen lässt. Azimuterfassungswinkel von etwa 90 Grad, wenn die Gruppe niedrige Breitengrade der Erde überfliegt, lassen daher auf eine sehr schnelle Änderung der Richtung des rechts- oder linksseitig mitfliegenden Satelliten schliessen, welche mit einem kleinen und leichten optischen Terminal dennoch bewältigt werden kann.

**Fig. 18** zeigt den Azimut- und den Elevations-Erfassungswinkel, unter denen ein Zentralsatellit seine Nachbarn in der übernächsten, rechts angrenzenden Umlaufbahn sieht. In dieser Figur ist daher eine analoge Kurve **86** für die jeweils übernächsten vernetzten Satelliten **46** und **48** auf benachbarten Umlaufbahnen dargestellt. In **Fig. 18** ist die max. Elevation =-1.285° bei Azimut = 0° und die min. Elevation = -9.047° bei Azimut ± 85.19°. Trotz eines nur geringfügig grösseren Elevationserfassungswinkels von etwa 2 Grad am Kreuzungspunkt gewährleistet die geringe Baugrösse der optischen Terminals **60** und **66** zusammen mit ihrer zueinander versetzten Anordnung nach **Fig. 16** die lückenlose Verfolgung seitlich mitfliegender Satelliten über einen vollen Erdumlauf der gesamten Gruppe ohne gegenseitige Abschattung.

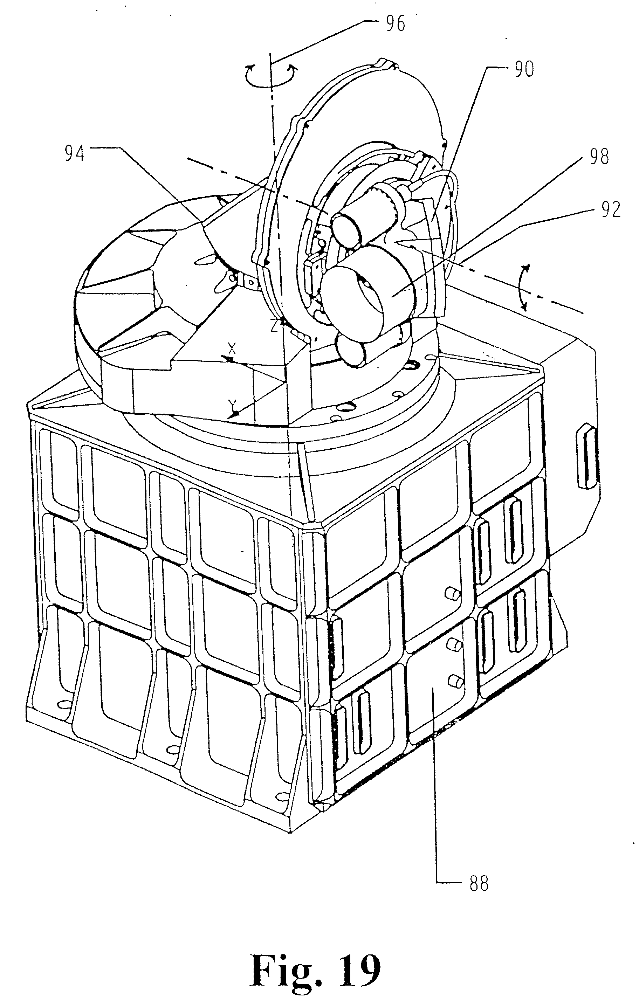

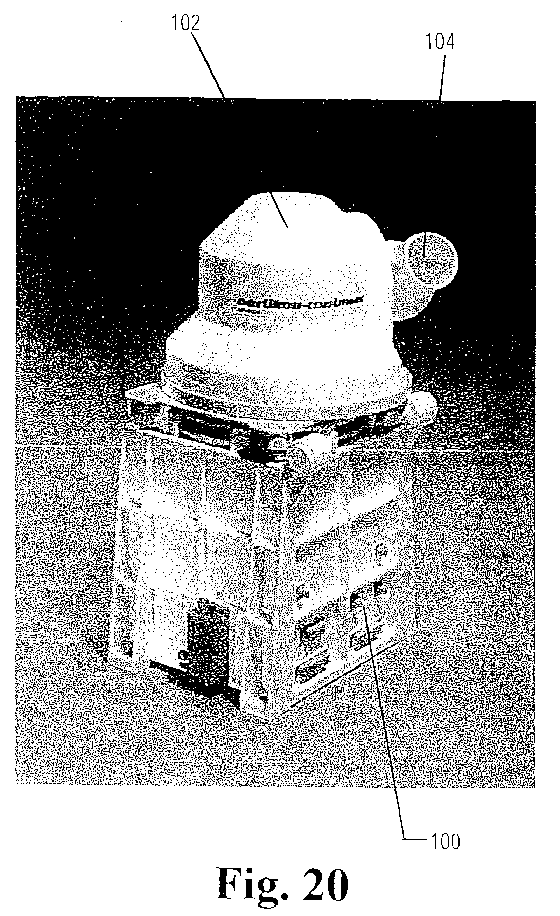

Der Aufbau eines optischen Terminals ist in **Fig. 19** dargestellt. Ein Gehäuse **88** beinhaltet neben Teilen der zur Steuerung und Signalverarbeitung erforderlichen Elektronik wesentliche Teile des optischen Systems wie dies in der Patentanmeldung **EP 0 863 627 A1** detailliert beschrieben ist. So findet in ihm neben diversen Detektoren und Sensoren auch ein wesentlicher Teil des Teleskops Platz, welches in seiner Ausrichtung mittels drehbarer Umlenkspiegel steuerbar ist. Eine ausrichtbare Öffnung **98** des Teleskops ist mittels eines um eine Elevations-Achse **92** drehbaren Spiegels **90** in seiner Elevation sowie eines um eine Azimut-Achse **96** drehbaren Spiegels **94** im Azimut-Winkel einstellbar. Die in **Fig. 20** dargestellte weitere Ausführungsform eines optischen Terminals weist einen der in **Fig. 19** gezeigten Ausführung ähnlichen Aufbau auf. Eine verstellbare Öffnung **104** eines Teleskops ist ähnlich wie in **Fig. 19** an einen um eine Elevationsachse drehbaren Spiegel angefügt und mit einem um eine Azimuterfassungswinkel-Achse drehbaren Körper **102** verbunden, welcher auf einem Gehäuse **100** ruht.

**Fig. 10** zeigt, dass die Achse der Öffnung **98** (**Fig. 19**) des exzentrisch gelagerten Teleskops eines optischen Terminals **32** (**Fig. 10**) parallel zur entsprechenden Achse des Terminals **36** verläuft, jedoch in der anderen Richtung gerichtet ist; die Lage dieser Achsen entspricht daher einem Azimut von 0° bzw. 180°. Die Terminals **34** und **38**, die in Wirklichkeit nur je ein Teleskop aufweisen, sind in **Fig. 10** mit dem Teleskop in jeweils drei Positionen dargestellt, um eine Bewegung der Achse zu veranschaulichen, die einer Winkeländerung von 0° bis 180° entspricht. Die Terminals **32, 34, 36** und **38** (**Fig. 10**) sind derart in einem Satelliten, gegebenenfalls über einen Träger, montiert, dass ihre Azimutachsen vier parallele Geraden bilden, die eine senkrecht zu ihnen verlaufende Referenzebene in vier Punkten schneiden, die ein Rechteck bilden. Dabei kann die Grenze der Elevation bei den Terminals **32** und **36** einen Winkel von beispielsweise ± 16,4° und bei den Terminals **34** und **38** einen Winkel von beispielsweise ± 10,5° erreichen. In **Fig. 17** ist die max. Elevation = - 0.645° bei Azimut = 0° und die min. Elevation = -4.523° bei Azimut ± 82.86°.

In weiterer Ausgestaltung der Erfindung ergibt sich aus **Fig. 10**, dass wenigstens vier miniaturisierte optische Terminals derart geometrisch auf dem Satellitenkörper angeordnet sein können, dass ihre Azimutachsen eine zur Flugrichtungsnormale senkrechte Ebene in vier Punkten schneiden, die ein Viereck, das heisst ein Rechteck oder im allgemeinen ein unregelmässiges Viereck, bilden, dass die Initialausrichtungen dieser vier optischen Terminals parallel zur Flugrichtungstangente orientiert sind, und dass die Initialausrichtungen von je zwei dieser vier optischen Terminals mit bzw. entgegen der Satellitenflugrichtungstangente gerichtet sind.

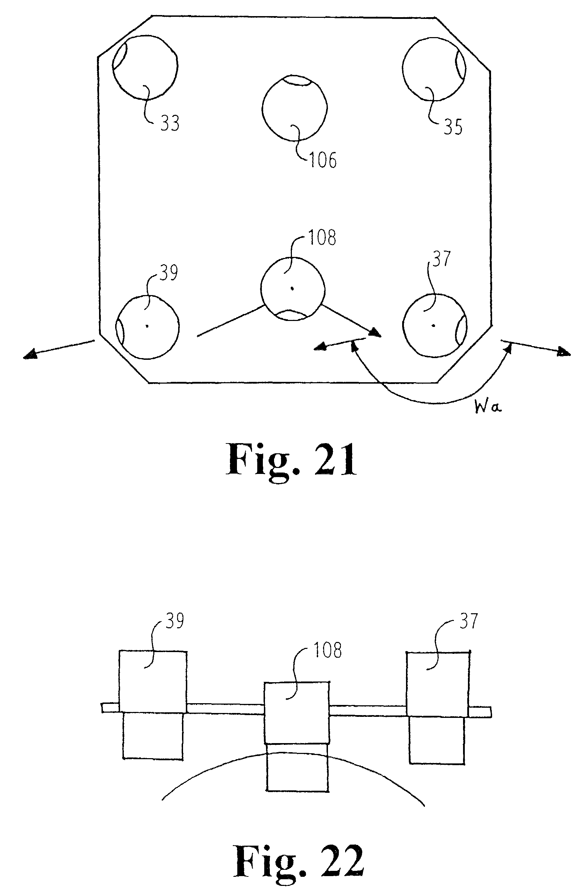

Die Anordnung nach **Fig. 10** kann gemäss **Fig. 21** mit zwei zusätzlichen Terminals **106**, **108** ausgerüstet sein, deren Azimutachsen sich in einer mittigen Ebene zwischen den durch die Azimutachsen der Terminals **33** und **39** und die Azimutachsen der Terminals **35** und **37** gebildeten Ebenen befinden, und wobei diese zwei zusätzlichen Azimutachsen die Referenzebene in zwei Punkten schneiden, die sich innerhalb der Fläche des durch die anderen vier Punkte definierten Vierecks befinden. Wenn zudem der Kopf des zusätzlichen Terminals über die Höhe bzw. Tiefe der anderen zwei Köpfe **33**, **35** herausragt, brauchen diese Terminals nicht vom exzentrischen Typ zu sein. Entsprechendes gilt für die Terminals **108** bzw. **37**, **39** (**Fig. 22**), das heisst, dass alle Terminals auch vom symmetrischen Typ sein können.

**Fig. 15** zeigt, dass die Achse der Öffnung **98** (**Fig. 19**) des exzentrisch gelagerten Teleskops eines optischen Terminals **74** mit der entsprechenden Achse des Terminals **72** übereinstimmt, jedoch in der anderen Richtung gerichtet ist; die Lage dieser Achsen entspricht daher einem Azimut von 0°. Die Terminals **68** und **70**, die in Wirklichkeit nur je ein Teleskop aufweisen, sind in **Fig. 15** mit dem Teleskop in jeweils drei Positionen dargestellt, um eine Bewegung der Achse zu veranschaulichen, die einer Winkeländerung von 0° bis 180° entspricht. Zudem sind in **Fig. 15** die vier weiteren Terminals **76**, **78**, **80** und **82** symmetrisch bezüglich der Terminals **72**, **70**, **68** bzw. **74** angeordnet.

Die Terminals **68**, **70**, **72**, **74**, **76**, **78**, **80** und **82** (**Fig. 15**) sind derart in einem Satelliten, gegebenenfalls über einen Träger, wie beispielsweise in **Fig. 22** unten angedeutet, montiert, dass ihre Azimutachsen acht parallele Geraden bilden, von denen sich je vier in einer Ebene befinden und die eine senkrecht zu ihnen verlaufende Ebene in acht Punkten schneiden, die ein Rechteck bilden. Dabei kann die Grenze der Elevation bei den Terminals **68**, **70**, **78** und **80** einen Winkel von beispielsweise ± 7,7° und bei den Terminals **72**, **74**, **76** und **82** einen Winkel von beispielsweise ± 4,5 bzw. ± 9° erreichen. In der Anordnung nach **Fig. 21** und **22** sind die Teleskopköpfe derart versetzt, dass eine Änderung des jeweiligen Azimuterfassungswinkels Wa im Bereich von 0° bis 160° ohne weiteres möglich ist.

Die durch Relativbewegungen der Satelliten **4 - 12** und **42 - 58** zueinander notwendigen Vorhaltewinkel der Sendestrahlen der optischen Terminals können mittels der zu erwartenden Relativbewegungen der beteiligten Satelliten **4 - 12** und **42 - 58** eingestellt werden, welche in einem Computer aus den Bahndaten der beteiligten Satelliten **4 - 12** und **42 - 58** ermittelt werden.

Die durch Relativbewegungen der Satelliten **4 - 2** oder **42 - 58** zueinander bedingten Doppler-Frequenzverschiebungen werden dadurch ausgeglichen, dass ein Lokaloszillator-Laser des kohärenten Empfangssystems mittels einer Regelung in seiner Frequenz gesteuert wird, welche sowohl die zu erwartenden Relativbewegungen des sendenden Satelliten aufgrund der bekannten Bahndaten aller beteiligten Satelliten **4 - 12** oder **42 - 58** als auch das Systemverhalten des abzustimmenden Lokaloszillator-Lasers berücksichtigt.

Die Öffnungen **88** bzw. **104** des sende- und empfangsseitig genutzten Teleskops können durch die Spiegel **90** und **94** in Elevation und Azimut ausgerichtet werden, wodurch nur geringe Massen zur Ausrichtung des Teleskops bewegt werden müssen.

Die Terminals können auch vom exzentrischen Typ sein, derart, dass die Öffnungen **98** bzw. **104** des sende- und empfangsseitig genutzten Teleskops seitlich am um die Azimut - Achse drehbaren Körper **102** angebracht sind, wodurch an benachbart auf dem Satelliten angebrachten Körpern vorbeigestrahlt werden kann oder wodurch einzelne Terminals entsprechend versetzt angeordnet sein können.

Für die Satelliten **8**, **4** und **12** im Beispiel nach **Fig. 2** gelten die Bezeichnungen **Ir 504**, **Ir 505** bzw. **Ir 506** und für die Satelliten **10** und **6** die Bezeichnungen **Ir 406** bzw. **Ir 604**.

### Bezugszeichenliste

- 2: Satellit
- 4: Satellit
- 6: Satellit
- 8: Satellit
- 10: Satellit
- 12: Satellit
- 14 16: Umlaufbahn
- 18: Umlaufbahn
- 20: Umlaufbahn
- 22: Schnittpunkt
- 24: Nordpol
- 26: Kurve
- 28: optisches Terminal
- 30: optisches Terminal
- 32: optisches Terminal
- 33: optisches Terminal
- 34: optisches Terminal
- 35: optisches Terminal
- 36: optisches Terminal
- 37: optisches Terminal
- 38: optisches Terminal
- 39: optisches Terminal
- 40: Satellit
- 42: Satellit
- 44: Satellit
- 46: Satellit
- 48: Satellit
- 50: Satellit
- 52: Satellit
- 54: Satellit
- 56: Satellit
- 58: Satellit
- 60: optisches Terminal
- 62: optisches Terminal
- 64: optisches Terminal
- 66: optisches Terminal
- 68: optisches Terminal
- 70: optisches Terminal
- 72: optisches Terminal
- 74: optisches Terminal
- 76: optisches Terminal
- 78: optisches Terminal
- 80: optisches Terminal
- 82: optisches Terminal
- 84: Kurve
- 86: Kurve
- 88: Gehäuse
- 90: Spiegel
- 92: Elevations-Achse
- 94: Spiegel
- 96: Azimut-Achse
- 98: Öffnung
- 100: Gehäuse
- 102: Körper
- 104: Öffnung
- 106: zusätzliches Terminal
- 108: zusätzliches Terminal
- 110: Träger

## Patentansprüche

1. Verfahren zum unterbrechungsfreien Betrieb von optischen Nachrichtenverbindungen zwischen Satelliten in LEO-Netzen, um über Terminals **(28 - 38; 60 - 82)** Nachrichten bidirektional mittels eines kohärenten optischen Übertragungsverfahrens zu übermitteln,
**dadurch gekennzeichnet, dass**
die geometrische Lage von wenigstens vier miniaturisierten Terminals **(32, 34, 36, 38)** auf dem Satellitenkörper in Kombination mit ihrer miniaturisierten Grösse und mit ihren Azimut- und Elevations-Schwenkmöglichkeiten derart gewählt wird, dass mehrere Verbindungen zu benachbarten Satelliten **(4 - 12; 42 - 58)** sowohl mit als auch entgegen der Satellitenflugrichtung sowie auch seitlich zur Satellitenflugrichtung möglich sind, um unabhängig vom genauen Orbit-Typ des LEO-Netzes durch die Möglichkeit der kohärenten Detektion von Lichtsignalen sowie des kohärenten Tracking der Einfallsrichtung von Lichtsignalen unterbrechungsfreie Verbindungen sicherzustellen,
dass die Azimutachsen dieser vier optischen Terminals **(32, 34, 36, 38)** eine zu einer Flugrichtungsnormale senkrechte Referenzebene in vier Punkten schneiden, die ein Viereck bilden,
und dass die Initialausrichtungen dieser vier optischen Terminals parallel zur Flugrichtungstangente orientiert sind.

2. Verfahren nach Anspruch 1,
**dadurch gekennzeichnet, dass**
die geometrische Lage von vier Terminals auf dem Satellitenkörper derart gewählt ist, dass während ein erstes optisches Terminal **(32)** die Verbindung zu einem auf gleicher Umlaufbahn vorausfliegenden Satelliten **(12)** hält, ein auf gleicher Umlaufbahn nachfliegender Satellit **(8)** durch ein zweites optisches Terminal **(36)** erfasst wird,
und dass zwei weitere optische Terminals **(34, 38)** den in Flugrichtung des Satelliten links- bzw. rechtsseitigen Bereich und damit je einen auf benachbarten Umlaufbahnen mitfliegenden Satelliten **(6, 10)** erfassen.

3. Verfahren nach Anspruch **1** oder **2**,
**dadurch gekennzeichnet, dass**
mindestens zwei optische Terminals **(34, 38, 68, 78)** im Azimut einen Winkelbereich von -90 bis +90 Grad überstreichen.

4. Verfahren nach einem der Ansprüche 1 bis 3,
**dadurch gekennzeichnet, dass**
ein zur Verfolgung der Satelliten durch Ausrichtung eines Teleskops erforderliches Differenzsignal für einen zur Ausrichtung vorgesehenen Regelkreis durch kohärente Detektion, beispielsweise in einem aus mehreren Sektoren bestehenden kohärent betriebenen Detektor, gewonnen wird.

5. Verfahren nach einem der Ansprüche **1** bis **4**,
**dadurch gekennzeichnet, dass**
die durch Relativbewegungen der Satelliten (**4 - 12; 42 - 58**) zueinander bedingten DopplerFrequenzverschiebungen dadurch ausgeglichen werden, dass ein Lokaloszillator-Laser des kohärenten Empfangssystems mittels einer Regelung in seiner Frequenz gesteuert wird, welche sowohl die zu erwartenden Relativbewegungen des sendenden Satelliten aufgrund der bekannten Bahndaten aller beteiligten Satelliten **(4- 12; 42 - 58)** als auch das Systemverhalten des abzustimmenden Lokaloszillator-Lasers berücksichtigt.

6. Anordnung für einen Satelliten, mit wenigstens vier miniaturisierten optischen Terminals, zur Durchführung des Verfahrens nach einem der Ansprüche **1** bis **5**, wobei diese Terminals **(32, 34, 36, 38, 33, 35, 37, 39, 68, 80, 70, 78)** derart geometrisch auf dem Satellitenkörper angeordnet sind, dass ihre Azimutachsen eine Tangentialebene zur Umlaufbahn in vier Punkten schneiden, die ein Viereck bilden, wobei die Initialausrichtungen dieser vier optischen Terminals parallel zur Flugrichtungstangente orientiert sind, und wobei die Initialausrichtungen von je zwei dieser vier optischen Terminals mit bzw. entgegen der Satellitenflugrichtungstangente gerichtet sind.

7. Anordnung nach Anspruch **6**,
**dadurch gekennzeichnet, dass**
die Azimutachsen dieser vier optischen Terminals minderstens paarweise **(33, 35, 39, 37)** parallel verlaufen und ihre Azimutachsen die Tangentialebene in vier Punkten schneiden, die zumindest angenähert ein Rechteck bilden,
dass diese vier Terminals vier Eckterminals **(33, 35, 37, 39)** sind,
dass zwei zusätzliche Terminals (**106, 108**) vorhanden sind, deren Azimutachsen sich in einer mittigen Ebene zwischen den durch die Azimutachsen von zwei **(33, 39)** dieser Eckterminals und die Azimutachsen von zwei anderen **(35, 37)** dieser Eckterminals gebildeten Ebenen befinden,
und dass die Azimutachsen dieser zwei zusätzlichen Terminals **(106, 108)** die Tangentialebene in zwei Punkten schneiden, die sich innerhalb der Fläche des durch die anderen vier Punkte definierten Vierecks befinden.

8. Anordnung nach Anspruch **7**,
**dadurch gekennzeichnet, dass**
ein **(106, 108)** oder beide zusätzliche Terminals gegenüber den anderen Terminals **(33, 35, 37, 39)** in der Höhe versetzt ist.

9. Anordnung für einen Satelliten, mit wenigstens acht miniaturisierten optischen Terminals, zur Durchführung des Verfahrens nach einem der Ansprüche **1** bis **5**, wobei diese Terminals **(68, 74, 82, 80, 70, 72, 76, 78)** derart geometrisch auf dem Satellitenkörper angeordnet sind, dass ihre Azimutachsen eine Tangentialebene zur Umlaufbahn in acht Punkten schneiden, von denen zumindest angenähert sich die vier ersten in einer ersten Geraden und die vier letzten in einer zweiten Gerade befinden, wobei die Initialausrichtungen dieser acht optischen Terminals parallel zur Flugrichtungstangente orientiert sind, und wobei die Initialausrichtungen von je vier dieser acht optischen Terminals mit **(68, 74, 82, 80)** bzw. entgegen **(70, 72, 76, 78)** der Satellitenflugrichtungstangente gerichtet sind.

10. Anordnung nach einem der Ansprüche **6** bis **9**,
**dadurch gekennzeichnet, dass**
mindestens zwei Terminals vom exzentrischen Typ sind.

11. Anordnung nach einem der Ansprüche **6** bis **10**,
**dadurch gekennzeichnet, dass**
kritische und massereiche Teile der sende- und empfangsseitig genutzten Teleskope nicht relativ zum Satelliten bewegt werden und im Gehäuse **(88** bzw. **100)** des optischen Terminals gelagert sind und/oder dass Spiegel **(90, 94)** sowohl von einem sendeseitig als auch von einem empfangsseitig genutzten Teleskop gemeinsam zur Ausrichtung ihrer Öffnungen genutzt werden.

12. Anordnung nach einem der Ansprüche **6** bis **11**,
**dadurch gekennzeichnet, dass**
die Anwendung kohärenter Übertragungsverfahren die Beeinflussung des empfangenen Signals durch das Signal des eigenen optischen Senders mittels unterschiedlicher optischer Frequenzen vermeidet.

## Claims

1. Method for the uninterrupted operation of optical communication links between satellites in LEO networks in order to transmit data bidirectionally via terminals (28 - 38; 60 - 82) by means of a coherent optical transmission process,
**characterised in that**
the geometric position of at least four miniaturised terminals (32, 34, 36, 38) on the satellite body is selected in combination with their miniaturised size and their azimuthal and elevational swivelling options in such a way that a plurality of links to neighbouring satellites (4 - 12; 42 - 58) are possible both in and opposite to the satellite's direction of travel, as well as laterally to the satellite's direction of travel, in order to ensure uninterrupted links irrespective of the exact type of orbit of the LEO network through the option of coherently detecting light signals and of coherently tracking the direction of incidence of light signals,
that the azimuthal axes of these four optical terminals (32, 34, 36, 38) intersect a reference plane perpendicular to a normal to the direction of travel at four points which form a quadrilateral,
and that the initial alignments of these four optical terminals are orientated parallel to the tangent to the direction of travel.

2. Method according to Claim 1,
**characterised in that**
the geometric position of four terminals on the satellite body is selected in such a way that while a first optical terminal (32) maintains the link to a satellite (12) travelling ahead of it on the same orbit, a satellite (8) travelling behind it on the same orbit is detected by a second optical terminal (36),
and that two further optical terminals (34, 38) detect the zone respectively to the left and right of the satellite's direction of travel and thus respectively detect a satellite (6, 10) travelling concurrently on neighbouring orbits.

3. Method according to claim 1 or 2,
**characterised in that**
at least two optical terminals (34, 38, 68, 78) azimuthally sweep an angular zone of -90 to +90 degrees.

4. Method according to any of claims 1 to 3,
**characterised in that**
a differential signal, necessary for tracking the satellites by pointing a telescope, for an automatic control system provided for pointing, is obtained by coherent detection, for example in a coherently operated detector consisting of a plurality of sectors.

5. Method according to any of claims 1 to 4,
**characterised in that**
the Doppler frequency shifts governed by relative movements of the satellites (4 - 12; 42 - 58) to one another are compensated by the fact that a local oscillator laser of the coherent receiving system is frequency-regulated by means of a control which takes into account both the expected relative movements of the transmitting satellite based on the known trajectory data of all the satellites involved (4 - 12; 42 - 58) and also the system behaviour of the local oscillator laser that is to be tuned.

6. Arrangement for a satellite, having at least four miniaturised optical terminals, for implementing the method according to any of claims 1 to 5, these terminals (32, 34, 36, 38, 33, 35, 37, 39, 68, 80, 70, 78) being geometrically arranged on the satellite body in such a way that their azimuthal axes intersect a plane tangential to the orbit at four points which form a quadrilateral, the initial alignments of these four optical terminals being orientated parallel to the tangent to the direction of travel, and the initial alignments of a respective two of these four optical terminals being directed in or opposite to the tangent to the satellite's direction of travel.

7. Arrangement according to claim 6,
**characterised in that**
the azimuthal axes of these four optical terminals extend parallel at least in pairs (33, 35, 39, 37) and their azimuthal axes intersect the tangential plane at four points which form at least an approximate quadrilateral, that these four terminals are four corner terminals (33, 35, 37, 39),
that two additional terminals (106, 108) are present, the azimuthal axes of which are located in a central plane between the planes formed by the azimuthal axes of two (33, 39) of these corner terminals and by the azimuthal axes of two other (35, 37) of these corner terminals,
and that the azimuthal axes of these two additional terminals (106, 108) intersect the tangential plane at two points which are located within the area of the quadrilateral defined by the other four points.

8. Arrangement according to claim 7,
**characterised in that**
one (106, 108) or both additional terminals are offset in height relative to the other terminals (33, 35, 37, 39).

9. Arrangement for a satellite, having at least eight miniaturised optical terminals, for implementing the method according to any of claims 1 to 5, these terminals (68, 74, 82, 80, 70, 72, 76, 78) being arranged geometrically on the satellite body in such a way that their azimuthal axes intersect a plane tangential to the orbit at eight points, of which the first four are located at least approximately on a first straight line and the last four are located on a second straight line, the initial alignments of these eight optical terminals being orientated parallel to the tangent to the direction of travel, and the initial alignments of a respective four of these eight optical terminals being directed in (68, 74, 82, 80) or opposite to (70, 72, 76, 78) the tangent to the satellite's direction of travel.

10. Arrangement according to any of claims 6 to 9,
**characterised in that**
at least two terminals are of the eccentric type.

11. Arrangement according to any of claims 6 to 10,
**characterised in that**
critical and high-mass parts of the telescopes utilised at the transmitting and receiving ends are not moved relative to the satellite and are mounted in the enclosure (88 and 100, respectively) of the optical terminal and/or that mirrors (90, 94) on both a telescope used at the transmitting end and a telescope used at the receiving end are utilised jointly for pointing their apertures.

12. Arrangement according to any of claims 6 to 11,
**characterised in that**
the use of coherent transmission processes avoids the received signal being influenced by the signal from its own optical transmitter by means of different optical frequencies.

## Revendications

1. Procédé de fonctionnement sans interruption de liaisons de communication optiques entre des satellites de réseaux LEO pour transférer de manière bidirectionnelle des communications par l'entremise de terminaux (28-38; 60-82) au moyen d'un procédé de transmission optique cohérent,
caractérisé
en ce que la position géométrique d'au moins quatre terminaux miniaturisés (32,34,36,38) sur le corps de satellite en combinaison avec leur grandeur miniaturisée et avec les possibilités de pivotement en azimut et en élévation est choisie de telle sorte que plusieurs liaisons avec un satellite voisin (4-2; 42-58) soient possibles autant dans la direction de vol des satellites que à l'opposé de celle-ci ainsi que latéralement à la direction de vol des satellites pour assurer des liaisons sans interruption, indépendamment du type d'orbite précis du réseau LEO, par la possibilité de détecter de manière cohérente des signaux lumineux ainsi que de poursuivre de manière cohérente la direction d'incidence de signaux lumineux,
en ce que les axes d'azimut de ces quatre terminaux optiques (32,34,36,38) coupent un plan de référence perpendiculaire à la normale à la direction de vol en quatre points qui forment un carré, et
en ce que les orientations initiales de ces quatre terminaux optiques sont dirigées parallèlement à la tangente à la direction de vol.

2. Procédé selon la revendication 1,
caractérisé
en ce que la position géométrique de quatre terminaux sur le corps de satellite est choisie de telle sorte que, tandis qu'un premier terminal optique (32) maintient la liaison avec un satellite (12) volant en avant sur la même orbite, un satellite (8) volant en arrière sur la même orbite soit capté par un deuxième terminal optique (36), et
en ce que deux autres terminaux optiques (34,38) captent la zone de gauche ou de droite dans la direction de vol du satellite et donc, respectivement, un satellite (6,10) volant conjointement sur des orbites voisines.

3. Procédé selon la revendication 1 ou 2,
caractérisé
en ce qu'au moins deux terminaux optiques (34,38,68,78) balaient en azimut une plage angulaire de -90 à +90°.

4. Procédé selon l'une quelconque des revendications 1 à 3,
caractérisé
en ce qu'un signal dlfférentiel indispensable à la poursuite des satellites par orientation d'un télescope pour un circuit de réglage prévu pour l'orientation est obtenu par détection cohérente, par exemple dans un détecteur à fonctionnement cohérent constitué de plusieurs secteurs.

5. Procédé selon l'une quelconque des revendications 1 à 4,
caractérisé
en ce que les décalages de fréquence Doppler dus à des déplacements relatifs des satellites (4-12; 42-58) les uns par rapport aux autres sont compensés de telle sorte qu'un laser à oscillateur local du système de réception cohérent soit commandé par un réglage de sa fréquence qui tient compte autant des déplacements relatifs à attendre du satellite d'émission en raison des données d'orbite connues de tous les satellites concernés (4-12; 42-58) que du comportement du laser à oscillateur local à accorder dans le système.

6. Dispositif pour un satellite équipé d'au moins quatre terminaux optiques miniaturisés pour réaliser le procédé selon l'une quelconque des revendications 1 à 5, dans lequel ces terminaux (32,34,36,38,33,35,37,39, 68,80,70,78) sont agencés géométriquement sur le corps de satellite de telle sorte que leurs axes d'azimut coupent un plan tangentiel à l'orbite en quatre points qui forment un carré, les orientations initiales de ces quatre terminaux optiques sont dirigées parallèlement à la tangente à la direction de vol, et les orientations initiales de deux de ces quatre terminaux optiques sont dirigées selon la tangente à la direction de vol des satellites ou à l'encontre de celle-ci.

7. Dispositif selon la revendication 6,
caractérisé
en ce que les axes d'azimut de ces quatre terminaux optiques s'étendent au moins parallèlement par paires (33,35,39,37) et leurs axes d'azimut coupent le plan tangentiel en quatre points qui forment au moins approximativement un carré,
en ce que ces quatre terminaux sont quatre terminaux de coin (33,35,37,39),
en ce qu'il y a deux terminaux supplémentaires (106,108) dont les axes d'azimut se trouvent dans un plan central entre les plans formés par les axes d'azimut de deux (33,39) de ces terminaux de coin et les axes d'azimut des deux autres (35,37) de ces terminaux de coin, et
en ce que les axes d'azimut de ces deux terminaux supplémentaires (106,108) coupent le plan tangentiel en deux points qui se trouvent à l'intérieur de la surface du carré défini par les quatre autres points.

8. Dispositif selon la revendication 7,
caractérisé
en ce qu'un terminal (106,108) ou les deux terminaux supplémentaires est ou sont décalés en hauteur par rapport aux autres terminaux (33,35,37,39).

9. Dispositif pour un satellite équipé d'au moins quatre terminaux optiques miniaturisés pour réaliser le procédé selon l'une quelconque des revendications 1 à 5, dans lequel ces terminaux (68,74,82,80,70,72,76,78) sont agencés de manière géométrique telle sur le corps de satellite que leurs axes d'azimut coupent un plan tangentiel à l'orbite en huit points, dont au moins approximativement les quatre premiers se trouvent sur une première droite et les quatre derniers sur une deuxième droite, les orientations initiales de ces quatre terminaux optiques sont dirigées parallèlement à la tangente à la direction de vol et les orientations initiales de quatre de ces huit terminaux optiques sont dirigées dans la direction de la tangente (68,74,82,80) ou à l'opposé de la direction de la tangente (70,72,76,78) de la direction de vol des satellites.

10. Dispositif selon l'une quelconque des revendications 6 à 9,
caractérisé
en ce qu'au moins deux terminaux sont de type excentrique.

11. Dispositif selon l'une quelconque des revendications 6 à 10,
caractérisé
en ce que des parties critiques et massives de télescopes utilisés côté émission et côté réception ne sont pas déplacées par rapport au satellite et sont montées dans le boîtier (88 ou 100) du terminal optique et/ou en ce que des miroirs (90,94) sont utilisés autant par un télescope utilisé côté émission que par un télescope utilisé côté réception conjointement pour orienter leurs ouvertures.

12. Dispositif selon l'une quelconque des revendications 6 à 11,
caractérisé
en ce que l'utilisation d'un procédé de transmission cohérent évite d'influencer le signal reçu par le signal de l'émetteur optique propre au moyen de fréquences optiques différentes.
